# EUROPEAN PATENT SPECIFICATION

(11) **EP 2 264 373 B1**
(45) Date of publication and mention of the grant of the patent: **08.07.2015**
(21) Application number: 10163805.4
(22) Date of filing: 25.05.2010
(51) Int. Cl.: F24F 5/00, F24J 2/05, F24J 2/26, F24J 2/40, F25B 17/08, F25B 27/02

(54) **COMPRESSOR DEVICE FOR AN AIR CONDITIONING SYSTEMS**
VERDICHTERVORRICHTUNG FÜR EINE KLIMAANLAGE
DISPOSITIF COMPRESSEUR POUR UN SYSTÈME DE CLIMATISATION

(30) Priority: 29.05.2009 IT MI20090960
(43) Date of publication of application: 22.12.2010
(73) Proprietor: Olcese, Marco, 16135 Genova (IT)
(72) Inventor: Olcese, Marco, 16135 Genova (IT)
(74) Representative: Ponzellini, Gianmarco

(56) References cited:
- DE-A1-102006 029 783
- DE-U1-202008 014 419
- FR-A1- 2 535 031
- US-A- 5 950 618

## Description

The present invention relates to a compressor device for environmental conditioning plants. The invention also relates to an environmental conditioning plant which incorporates the compressor device and which is applicable in particular for conditioning small environments such as homes or the like.

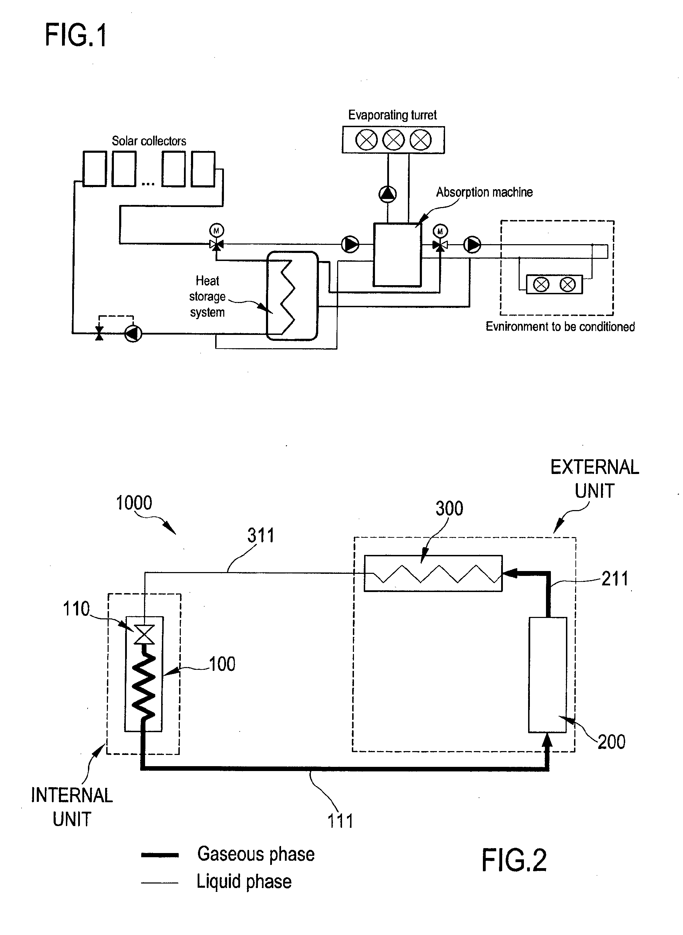

Conditioning plants of known type comprise one or more external units dedicated to exchanging heat with an external plant and one or more units housed internally in the room or rooms to be conditioned. A work fluid is circulated between the internal and external units with the aim of realising the desired thermodynamic cycle. For example, in domestic conditioners (which typically use electrical energy for realising the refrigeration cycle) a work fluid is compressed, yielding heat to the outside, and then cooled by expansion, such as to exchange heat with the environment to be conditioned. A further known type of plant, which exploits solar energy, and which is schematically illustrated in figure 1, comprises a series of solar panels, a heat storage system, an absorption machine and an evaporation turret and a separate circuit, coupled to the above-described environmental conditioning plant. These components are interconnected by at least three independent circuits and exhibit a complexity which is such as to justify the use thereof only in large plants (with refrigerating capacity of greater than 10kWt). For smaller refrigerating potential, such as those required for example in domestic plants or in any case for cooling/climate control of relatively-small environments, the above-described plants are inadequate mainly due to their constructional complexity, their complicated management and their costs.

A further known type of plant is described in patent document DE-202008014419-U.

### Summary of the Invention.

In this situation, an aim of the invention is to provide a plant for conditioning and possibly also heating, which wholly or partially obviates the drawbacks and problems in the prior art.

A further aim of the present invention is a solar compressor to be used in a plant for environment conditioning.

A further aim of the invention is to make available a climate-control plant which exploits solar energy, but which at the same time exhibits a plant design simplicity which is such as to enable use thereof in relatively low-power climate-control plants, such as for example plants for domestic use.

These and other aims besides are attained by a plant as in one or more of the accompanying claims.

The invention relates to a compressor device for an environmental conditioning plant according to claim 1.

In an aspect of the invention, the absorbent material comprises porous material (for example adsorbent material, preferably zeolite), preferably a porous adsorbent material which is able to absorb gas (steam in the case in which the operating fluid is water) during the cooling in the second operating condition and to yield gas (steam in the case in which the operating fluid is water) during the heating, in the first operating condition. In an aspect having the characteristics of any one of the preceding aspects, the plant comprises two or more heat-exchange modules.

In an aspect having the characteristics of any one of the preceding aspects, the selector means include a movement system acting on the reflector and/or the containing body of the (or each) heat-exchange module. In particular, if the movement system is acting on the reflector, the system is structured such as to move the reflector between a position, corresponding to the first operating condition, in which the reflector focuses incident solar radiation thereon towards the transparent wall, and a position, corresponding to the second operating condition, in which the reflector substantially prevents solar radiation from striking the transparent wall.

If the movement system is acting on the containing body, the system is able to move the containing body between a position, corresponding to the first operating condition, in which the reflector focuses incident solar radiation thereon towards the transparent wall, and in a position, corresponding to the second operating condition, in which the reflector substantially prevents solar radiation from striking on the transparent wall.

If, finally, the movement system is acting on the containing body and on the reflector, the system is able to move the containing body and the reflect between a position, corresponding to the first operating condition, in which the reflector focalises incident solar radiation thereon towards the transparent wall, and in a position, corresponding to the second operating condition, in which the reflector substantially prevents solar radiation on the transparent wall.

In an aspect having the characteristics of any one of the preceding aspects, the containing body is substantially positioned at an axis or focal zone of the reflector (which exhibits a parabolic profile, or in any case a profile such as to concentrate the incident solar rays in a predetermined zone), the movement system moving the reflector and/or the containing body by rotation, for example by about 180°, about the focal axis. In an aspect having the characteristics of any one of the preceding aspects, there are at least two containing bodies which are symmetrically opposite with respect to a rotation axis of the reflector. Obviously there could also be three, four or even more bodies symmetrically positioned with respect to the rotation axis.

In an aspect having the characteristics of any one of the preceding aspects, the selector means comprise at least a control unit which is operatively connected with the movement system and programmed such as to selectively command the positioning of the heat-exchange module or modules in the first or the second operating condition. In a particular embodiment, the control unit is also programmed to command the movement system in such a way as to orientate the reflector and/or the containing body according to the position of the sun.

In an aspect having the characteristics of any one of the preceding aspects, the plant comprises a first group having one or more heat-exchange modules, and a second group having one or more heat-exchange modules.

In an aspect having the characteristics of any one of the preceding aspects, the control unit is programmed to periodically synchronise the displacement of the first group of heat-exchange modules from the first to the second operating condition and the displacement of the second group of heat-exchange modules from the second to the first operating condition.

In an aspect having the characteristics of any one of the preceding aspects, the heat-exchange modules of the first group are connected in parallel with respect to the heat-exchange module of the second group, and the plant comprises first fluid distribution means operating upstream of the compressor in order to selectively enable and disable a fluid access from the expansion unit to the modules of the first and the second group, and second fluid distribution means operating downstream of the compressor in order to selectively enable or disable a fluid discharge from the modules of the first and the second group downstream. The control unit (if necessary or present) is programmed to control the second distribution means and enable a discharge of operating fluid from the group of modules positioned at the first operating condition downstream, and in order to control the first distribution means and enable a fluid access upstream towards the group of modules positioned in the second operating condition.

Importantly, the first group can also comprise a single fluid-collecting manifold in inlet to the plurality of modules of the first group and, similarly, the second group can also comprise a single fluid-collecting manifold of the fluid in inlet to the plurality of modules of the second group: in this case, the second distributing means comprise at least a third line connected to the inlet manifold to the first group and at least a fourth line connected to the inlet manifold of the second group, as well as fluid check organs located on the third and the fourth line and connected with the control unit with the aim of synchronising the fluid access to the modules of the first group and the modules of the second group during the operating stages when the modules are in the second operating condition.

An aspect having the characteristics of any one of the preceding aspects comprises a single fluid collection manifold in outlet from the plurality of modules of the first group. An aspect having the characteristics of any one of the preceding aspects comprises a single fluid-collecting manifold in outlet from the plurality of modules of the second group, the second selector means comprising at least a first line connected to the manifold of the first group and at least a second line connected to the manifold of the second group. The first and/or the second line connect the respective manifolds with the condensation unit.

An aspect having the characteristics of any one of the preceding aspects comprises at least a by-pass line which connects a zone of the condensation unit in which the operating fluid is present in the liquid phase with the heat-exchange modules. For example, the by-pass line connects the manifold with the condensation unit and comprises a by-pass valve which is selectively controllable to open or close. For example, the control unit (if present) is programmed to command the by-pass valve selectively to open and close in order to create, with the first and/or the second line, a water heating circuit.

In an aspect having the characteristics of any one of the preceding aspects, the plant comprises at least a connecting line for connecting the inlet opening or openings to the second and/or the third seating with the cooling environment. For example, ventilation means can be comprised which operate on the connecting line; in this case the control unit can be programmed to command the ventilation means in order to determine a forced ventilation in the line when the containing body is in the second operating condition and in order to determine a stagnant condition of the fluid circulation in the line when the containing body is in the first operating condition.

Finally, a software program can be comprised, for example storable on an optical or magnetic support or radio carrier, or on any other support, which when run by the control unit of one of the above-described aspects, is able to program the unit itself to perform the correspondingly illustrated functions.

### Detailed description of the Invention.

The invention will now be described, by way of non-limiting illustration, in some preferred embodiments thereof, with reference to the accompanying figures of the drawings, in which:
figure 1 is a diagram of a typical system of the prior art;
figure 2 is a simplified diagram of a plant of the invention;
figure 3 is a compressor device which can be used in the plant of figure 2;
figure 3A is a transversal section of a component of the compressor of figure 3;
figure 4 is a diagram of the operating fluid circuit associated to the compressor of figure 3;
figure 5 is a variant of a compressor device that is usable in the plant of figure 2;
figure 5A illustrates, in a transversal section, a component of the compressor of figure 5;
figures 6A and 6B are a diagram of the operating fluid circuit associated to the compressor of figure 3 or 5 in two different operating conditions;
figures 7A and 7B show a transversal section relating to heat-exchange modules which can be used in the plants of figures 2-6;
figure 8 is an operating diagram relating to the modules of figure 7.

With reference to the accompanying figures of the drawings, and in particular to figure 2, 1000 denotes an environment conditioning plant in its entirety, comprising:
an expansion unit 100 of an operating fluid (for example water or a mixture of water and other liquids, or fluids of different nature). The expansion unit 100 comprises, for example, a valve or another laminating device 110 followed by an evaporator. At least a connecting line 111 connects the outlet of the evaporator with the inlet of the compressor device 200. In particular, the compressor device 200 is set in fluid communication with the expansion unit and receives the operating fluid in inlet (for example water in the steam phase) coming from the expansion unit at an inlet pressure (relatively low, for example lower than atmospheric pressure) and releases the operating fluid in outlet (still in gaseous phase) at an outlet pressure (typically higher than atmospheric pressure) which is greater than the inlet pressure.

At least a further connecting line 211 is located downstream of the compressor device, which takes the fluid in outlet from the device 200 up to an inlet of a condenser device 300 where at least a part of the operating fluid is condensed in the liquid phase. Finally, at least a return line 311 returns the operating fluid (typically at least partially in the liquid phase) towards the inlet of the laminating device 110. Note that since the unit 100 has to condition an environment, the unit 100 operates internally of the said environment to be conditioned (and it is provided with at least a heat-exchange surface predisposed to collect heat and transfer it to the expanding operating fluid), while the compressor 200 and the unit 300 typically operate externally.

In greater detail, the compressor device comprises at least a heat-exchange module 500 which receives the operating fluid and houses absorbent material, and selector means for placing the heat-exchange module 500 in a first operating condition, in which the heat-exchange module 500 is at least partially exposed to solar radiation, and in a second operating condition, in which the heat-exchange module 500 is exposed to a cooling environment.

Each heat-exchange module comprises: at least a containing body 501 of absorbent material 502 having at least a wall that is at partially-transparent to solar radiation (typically one or more walls of the containing body 501 are made of a transparent material, such as, for example, glass) in order to enable heating the fluid and the absorbent material; at least a reflector 503 which is positionable in relation to the containing body such as substantially to focus incident solar radiation on the reflector towards the transparent wall.

As will be illustrated in the following, the passage from the first to the second operating condition and vice versa causes either or both of the containing body 501 or a reflector associated thereto to move. The absorbent material is selected from materials having the characteristic of absorbing fluid (for example steam) in the presence of a relatively-low first temperature, causing a depression in the container, and releasing operating fluid in the presence of a relatively high temperature, leading to a pressure rise in the container in which the material is housed. Obviously the two above-mentioned temperatures depend on various factors, among which mainly the type of material used. In the case described herein the absorbent material is adsorbent, such as, for example, zeolite. Thanks to the described configuration, in the first operating condition the heat-exchange module is exposed to solar radiation, raising the temperature in the containing body 501 with a consequent release of steam by the absorbent material, while in the second operating condition, the heat-exchange module yields heat to the cooling environment, such that the absorbent material absorbs operating fluid, causing a pressure drop internally of the heat-exchange module.

The containing body houses at least a tubular body 504 which is predisposed to receive the operating fluid coming directly or indirectly from the evaporation unit and to send the operating fluid downstream of the heat-exchange module. The tubular body 504 also exhibits, for example on a lateral wall, a plurality of through-holes 505 in order to enable a passage of fluid between the internal cavity 505 of the tubular body and a zone in which the absorbent material is housed, such that according to the operating stage the fluid can be transferred from the tubular body to the absorbent material or from the absorbent material to the tubular body. In practice, in the illustrated embodiments, the absorbent material is confined in a space 507 defined between the external lateral wall of the tubular body 504 and the internal wall of the containing body.

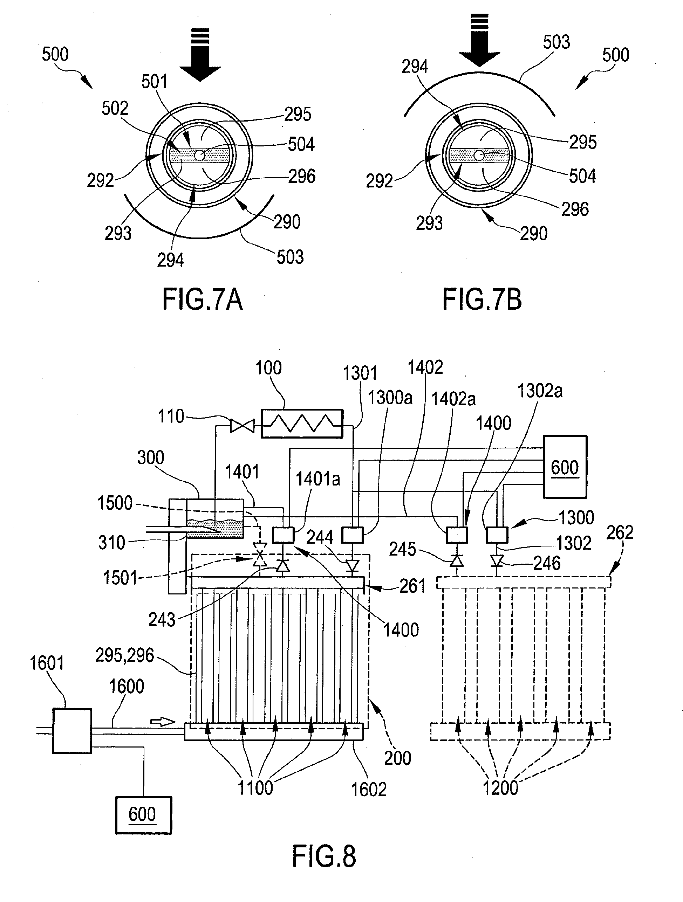

With reference to the embodiment illustrated in figures 7A and 7B, the containing body exhibits at least a first longitudinal seating 293 in which the tubular body and the absorbent material are housed, a second longitudinal seating 295 adjacent and sealedly separated with respect to the first longitudinal seating, and a third longitudinal seating 296, adjacent and sealedly separated with respect to the first longitudinal seating. The second and the third longitudinal seating are for example fashioned by using a member 294, for example made of metal or in any case of a highly heat-conducting material, at the opposite longitudinal flanks of the container defining the first longitudinal seating. The second and the third longitudinal seating are connected to one another, defining a single fluid channel with an inlet opening at an end of the second seating and an outlet opening at an end of the third seating such that a ventilation system can circulate a further fluid by supplying it, for example, through the second opening and discharging it from the third opening.

In a second variant each of the second and third seatings exhibits a respective inlet opening and a respective outlet opening: in this case it is possible to connect one or more sources of ventilation with two of the openings and one or more discharges with the two remaining openings. Independently of the solution adopted it is possible to realise, in the second and third seatings, either fluid flows (for example air) having the same flow direction or flows having opposite flow directions.

As can be seen in the figures, in a variant the containing body is housed internally of a glass tube 290, 292 having a single or double wall, in the latter case being free of insulation between the walls of the glass tube. In practice, the two glass tubes are coaxial and facilitate the radiation of the containing body and more precisely of the surface of the members defining the longitudinal seating or seatings, which being made of a heat-conducting material heat up the material contained therein during the first operating condition.

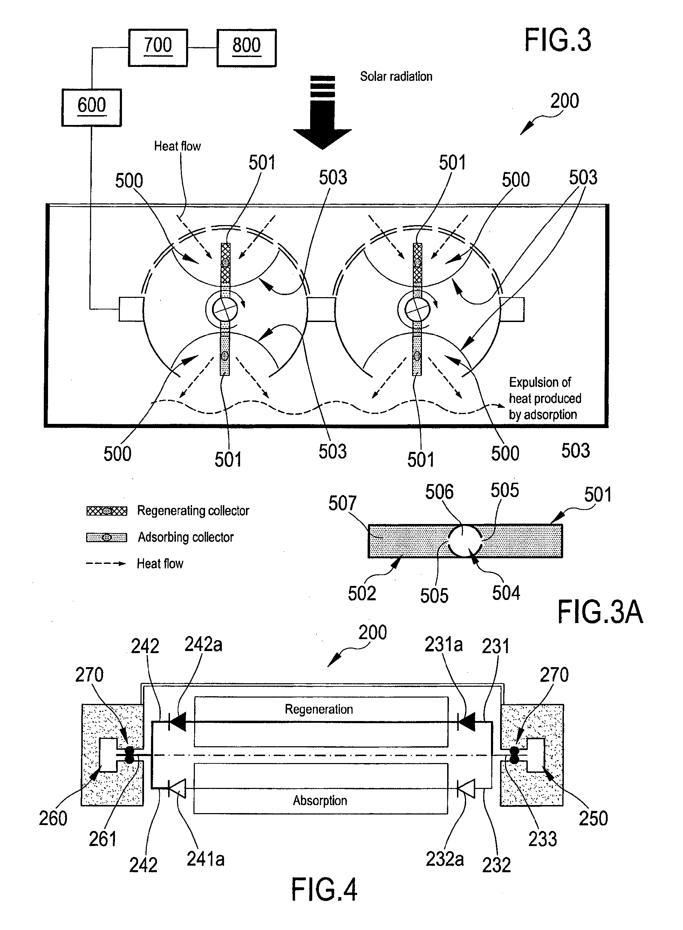

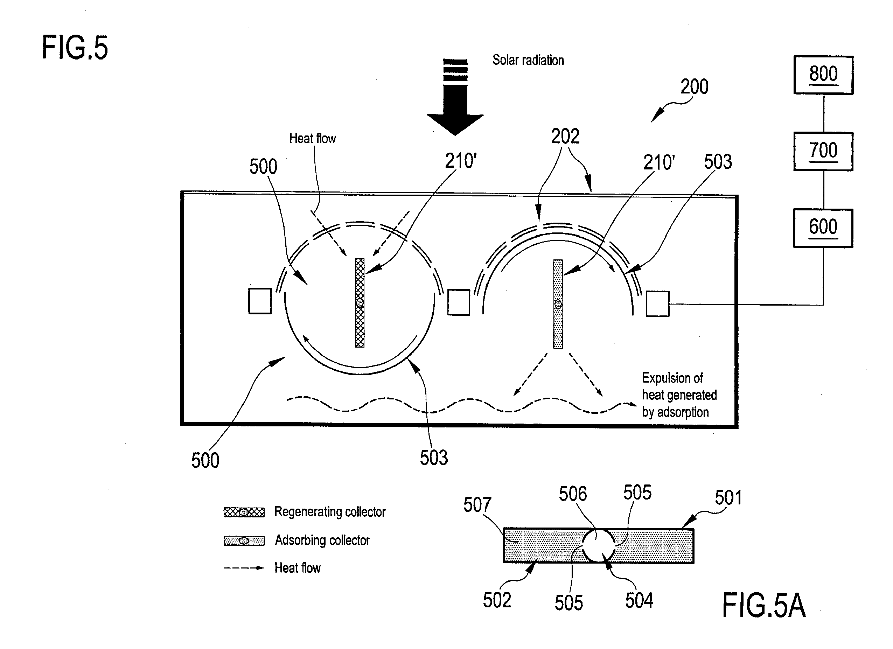

The plant can advantageously comprise two or more heat-exchange modules 500 (figures 3, 5, 8) and the selector means, schematically represented by a block 600, comprise a movement system acting on the reflector 503 and/or on the containing body 501 of the or of each heat-exchange module 500. In particular, if the movement system is acting on the reflector, the system is structured such as to move the reflector between a position, corresponding to the first operating condition, in which the reflector focuses incident solar radiation on it towards the transparent wall, and a position, corresponding to the second operating condition, in which the reflector substantially prevents solar radiation on the transparent wall (see the examples of figure 5, figure 6A and 6B and figures 7A and 7B).

If on the other hand the movement system is acting on the containing body, the system is able to move the containing body between a position that corresponds to the first operating condition, in which the reflector focuses incident solar radiation on it towards the transparent wall, and in a position corresponding to the second operating condition in which the reflector substantially prevents solar radiation on the transparent wall (this example is not illustrated).

Finally, if (see figures 3, 4) the movement system is acting both on the containing body and on the reflector, the system is able to move the containing body and the reflector between a position, corresponding to the first operating condition, in which the reflector focuses incident solar radiation on it towards the transparent wall, and in a position, corresponding to the second operating condition, in which the reflector substantially prevents solar radiation of the transparent wall.

As can be seen in the figures of the drawings, the containing body is substantially positioned at an axis or a focal zone of the reflector (which exhibits a parabolic profile or in any case a profile enabling concentration of the incident solar rays on a predetermined zone) and the movement system 600 moves the reflector and/or the containing body by rotation, for example about 180°, about the focal axis. In an embodiment, two containing bodies are comprised, symmetrically opposite with respect to a rotation axis of the reflector. Obviously, three, four or more bodies can be comprised, positioned symmetrically with respect to the rotation axis and in this case the selector means will move the reflector or the containing body such as selectively to enable/disable solar radiation on the various bodies (figure 3).

The selector means can comprise at least a control unit 700 which is operatively connected with the movement system 600 and programmed to selectively commad the positioning of the heat-exchange module or modules in the first or the second operating condition. In a special embodiment, the control unit is further programmed to command the movement system such as to orientate the reflector and/or the containing body according to the position of the sun such as to maximise the efficiency of the plant. For this purpose one or more sensors 800 can be connected to the control unit, which sensors 800 are able to detect the solar radiation and to periodically or continuously determine the solar radiation, enabling the control unit, which receives signals from the sensors that are proportional to the solar radiation detected by each sensor, to calculate the direction of maximum radiation and periodically or continuously align one or more containing bodies with the direction.

It is worthy of note that the plant can comprise a first group 1100 having one or more heat-exchange modules, and a second group 1200 having one or more heat-exchange modules. In this case, the control unit is programmed to periodically synchronise the displacement of the first group of heat-exchange modules from the first operating condition to the second operating condition, and the displacement of the second group of heat-exchange modules from the second to the first operating condition. The heat-exchange modules of the first group can be connected in parallel with respect to the heat-exchange modules of the second group (figure 8): in this case the first fluid distribution means 1300 operating upstream of the compressor are provided for selectively enabling and disenabling a fluid access from the expansion unit to the modules of the first and the second groups, and second fluid distribution means 1400 operating downstream of the compressor are provided for selectively enabling and disenabling a fluid discharge from the modules of the first and the second groups downstream.

The first and the second distribution means can be for example substantially passive elements (in particular not supplied with energy) which can enable selective fluid passage in the correct direction.

In detail, these elements can be check valves destined to define a single fluid circulation direction internally of the circuit, calibrated such as to open/close according to the necessary pressures/depressions which are generated internally of the solar compressor. The control unit 600 is, in the case of active elements, programmed to control the second distribution means 1400 and enable a discharge of the operating fluid from the group of modules positioned in the first operating condition downstream, as well as to control the first distribution means 1300 and enable fluid access from upstream towards the group of modules positioned in the second operating condition.

It is however clear that the adopting of a purely mechanical and passive system is extremely advantageous in terms of energy consumption (as well as reliability).

A single manifold 261 for collecting fluid in outlet from the plurality of modules of the first group collects the fluid coming from the first group of modules, while a single manifold 262 for collecting the fluid in outlet from the plurality of modules of the second group collects the fluid in outlet from the modules of the second group. The second selector means comprise at least a first line 1401, with a relative distributor valve 1401a, connected to the manifold of the first group and at least a second line 1402, with a relative distributor valve 1402a connected to the manifold of the second group: the first and second lines connect the respective manifolds with the condensation unit, such that the fluid is constantly transferred to the condensation unit and comes either from the modules of the first group (when the modules are in the first operating condition) or from the modules in the second group (when the modules are in the first operating condition).

As illustrated in the example of figure 8, the manifold 261 for the first group and the manifold 262 for the second group (when there are at least two groups) also functions as a manifold for collecting the fluid coming in inlet from the evaporation unit. The first means 1300 comprise a first and a second line 1301 and 1302 which are respectively connected to the manifold of the first and of the second group. The alternating supply and discharge towards and from the manifold 261 (or 262) is managed by the means 1300 and 1400. For this purpose the first means 1300 comprise the first line 1301, with a relative distributor valve 1301a, connected to the manifold of the first group and at least the second line 1302, with a relative distributor valve 1302a connected to the manifold of the second group; the first and the second lines 1301, 1302 connect the respective manifolds with the evaporation unit, such that the fluid is constantly transferred from the evaporation unit and supplied to the modules of the first group

(when the modules are in the second operating condition) or to the modules of the second group (when the modules are in the second operating condition).

In a variant, at least a by-pass line 1500 connects a zone 310 of the condensation unit 300 in which the operating fluid is present in the liquid phase with the heat-exchange modules. For example, the by-pass line connects the manifold 261 of the modules of the first group (if there are two groups there will be a further by-pass line with a respective valve for connecting the second manifold with the condensation unit) to the condensation unit and comprises a by-pass valve 1501 selectively controllable to open or close. For example, the control unit is programmed to command the by-pass valve selectively to open or close in order to create, with the first and/or the second line, a heating circuit for the water.

Note that the first group can also comprise a single manifold for collecting the fluid in inlet to the plurality of modules of the first group and, likewise, the second group can also comprise a single manifold for collecting the fluid in inlet to the plurality of modules of the second group: in this case, the second distribution means comprise at least a third line connected to the inlet manifold to the first group and at least a fourth line connected to the inlet manifold of the second group, as well as fluid check organs located on the third and fourth line and connected with the control unit with the aim of synchronising fluid access to the modules of the first group and the modules of the second group during the operating stages in which the modules are in the second operating condition (this variant is not illustrated).

Finally, as illustrated in figure 8, single-acting valves 243, 244 and eventually also 245, 246 are present, and act respectively on the lines 1401, 1301, 1402 and 1302.

Note that in the most interesting and advantageous embodiment from the point of view of energy saving and functionality it is the single-acting valves 243, 244 and possibly 245, 246, acting respectively on lines 1401, 1301, 1402 and 1302 which define the fluid circulation conditions (i.e. rendering the distributor valves superfluous); by specially calibrating the opening of the check valves, a minimum over-pressure becomes necessary for sending steam towards the condenser 300 (at the same time the by-pass valve on the inlet line closes the circuit due to the pressure in the manifold). On the other hand, when there is a depression in the manifold, it is the valve on the fluid circuit in arrival from the evaporator which opens and the valve delivering to the compressor which closes automatically.

At least a connecting line 1600 connects the inlet opening or openings to the second and/or the third seating 295, 296 with the cooling environment. For example, ventilation means 1601 can be provided, operating on the connecting line; in this case the control unit can be programmed to command the ventilation means to create a forced ventilation in the line when the containing body is in the second operating condition and to determined a stagnant condition of fluid circulation in the line when the containing body is in the first operating condition.

As for the variants of figure 3 and figure 4, each of the two modules 500 is alternatively connected downstream with the condenser 300 by means of respective lines 241, 242 (on which respective check valves 241A and 242A are positioned) which lead to a manifold 260 interposed between the condenser 300 and a common collecting line 261 on which a rotary seal 270 acts. Upstream, like delivery lines 231, 232 are provided (on which respective check valves act 231A, 232A). The delivery lines 231, 232 connect an inlet manifold 250 with the tubes 504 present in the modules 500. A common line 233 is interposed between the lines 231 and 232 and the manifold 250. A further rotary seal organ 270 acts on the line 233.

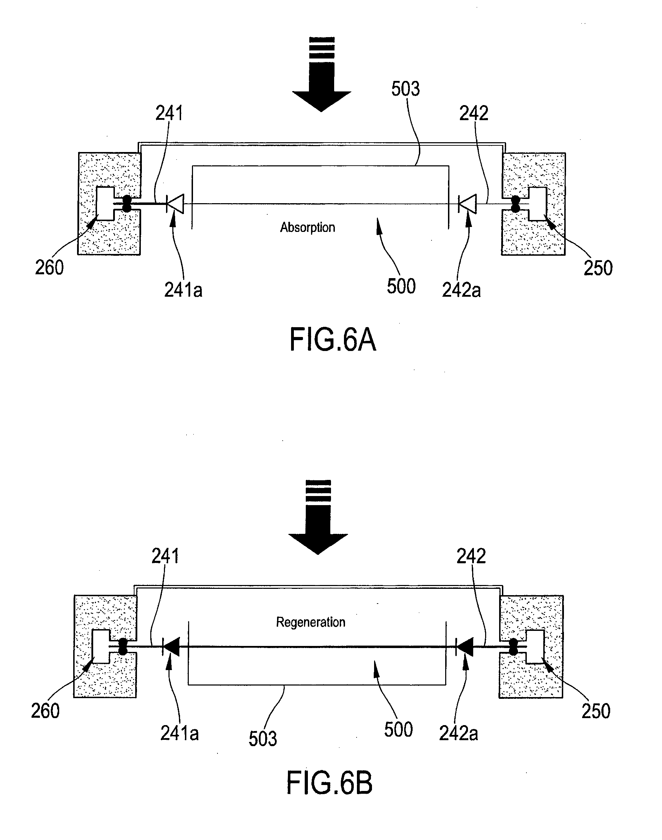

With reference to the variant of figures 5 and 6, the reflector 503 rotates and two modules 500 operate such that when one is in the first operating condition the second is in the second operating position, and vice versa. As illustrated in figures 6A and 6B, single-acting valves 241 A and 242A operate respectively upstream and downstream of each module 500 on respective lines 241, 242, which connect the module downstream with the unit 300 and upstream with the unit 100. In this case too manifolds 250, 260 are provided, connected with lines 241, 242.

Following on from the foregoing prevalently structural description, the operation of the plant and compressor device of the invention will now be illustrated.

With reference to figure 2, the plant exploits the refrigerating effect produced by direct expansion of a fluid (water or another fluid) in the liquid phase internally of the evaporating unit 100, which is positioned internally of the environment to be conditioned.

The expanded fluid has a lower temperature than ambient, due to the presure in the evaporator. Internally of the evaporating unit 100 the expanded cool fluid circulates in a heat exchanger which cools the ambient air striking its surfaces. The evaporating unit 100 is entirely similar to the evaporating units of electrical direct-expansion systems. The fluid leaves the evaporating unit in the form of steam and is directed to the outside towards the compressor device 200, consisting of an integrated system having one or more modules which function as solar panels as described herein above. The adsorbent material enables the steam to be absorbed at low pressure and the subsequent release thereof at a higher pressure. The stages of absorption and release (regeneration) of the steam are performed in a porous means (zeolite or another substance) which has the property of releasing the steam at relatively higher pressures by effect of a heat supply and in the presence of a relatively high temperature (regeneration stage), and of absorbing the steam at lower temperatures, generating a considerable depression. The temperature hike required for the regeneration is produced by solar radiation.

The steam released is then condensed in a heat exchanger of a condensation unit 300, from which the fluid is then returned in the liquid phase to the internal expansion unit in order for the cycle to recommence.

Integrating the porous means that absorbs/releases the steam internally of the panel system capturing the solar radiation is advantageous at the same time as the inversion of the functioning cycle of the reflectors which are part of the solar-ray capturing system. The functioning of each module is illustrated herein below.

The porous material 502 is housed internally of the containers 501, which porous material 502 also functions as a collector of the solar rays as it is directly exposed to the sun's rays; this maximises the efficiency of the heat transfer. The two semicircular members 294 which rest on the internal wall of the glass tube 292 have the function of capturing the solar radiation, the heat energy of which is transferred by conduction to the container 501, which in this configuration is not directly exposed to the sun's radiation. The air present in the volume of the second and third spaces delimited by the member 294 and the container 501 is stagnant during the regenerating stage (first operating condition), while it is circulated by forced convection, creating a flow in the direction of the axis of the container during the stage of absorption (second operating condition), enabling the adsorbed heat produced in this stage to be removed. The forced-convection air flow can cross the space of the collecting body in two configurations: in a single direction, with inlet at an end and outlet from the opposite end, or with inlet and outlet at the same end, which means that it flows through the collector in a direction in the volume 295 and then is recycled in the opposite direction in the volume 296.

The inversion of the cycle is obtained by rotation of the reflector or by rotation of the containing bodies or by rotation of both, if configurations are comprised which have a double reflector and an opposite double containing body. Note that it would be possible to provide reflectors and containing bodies arranged such that the stage alternation could be realised by means of translations relating to the reflectors with respect to the modules, such as to place the modules alternatively in the condition to absorb or yield heat.

In figure 8, which relates to five containing bodies, the air cooling circuit is illustrated for the stage of absorption in the configuration which includes only one flow direction. This circuit is made up of a manifold 1602 which distributes the air collected from the environment to the various modules 500; at the outlet of the tubes the air is sent once more into the environment or, as shown in figure 8, is collected by a second manifold which conveys the air to the condenser 300 where it is used for cooling. The condenser 300 can be a separate element of known type used in normal exchange batteries used in electrical direct-expansion systems, or can be integrated with the outlet steam manifold 261 of the solar compressor 200. The condenser can remove the condensation heat by directly exchanging it with environment air, or can collect the heat via an auxiliary circuit and use it for producing clean hot water.

A single steam manifold 261 is present internally of the solar compressor (see figure 8), connected directly to the internal tubes 504 of the containers of the porous material and two check valves 243 and 244 are present, which connect the manifold respectively to the condenser 300 and the evaporator 100. In this configuration the manifold functions alternatively as an outlet manifold of the steam from the modules during the regenerating stage (first operating condition) and as an inlet manifold in the stage of absorption (second operating configuration).

Therefore each module is crossed by a flow of steam in two opposite directions according to the stage of the cycle it is in. For the continuity of the cycle, it will therefore be necessary to have at least two identical groups of modules (a first and a second group), each having its own manifold in the two alternative stages of functioning such as always to have a module group in the absorption stage and another in the regeneration stage.

Figure 8 relates to a single module group (the second group being represented in a broken line). The configuration of figure 8 also gives the possibility of realising the heating functioning mode without requiring the addition of an independent circuit for removing the heat from the containers in the winter season. This can be realised by inserting a by-pass valve 246 which places the condenser 300 in direct communication with the manifold 261, enabling the condensed liquid to return to the steam manifold and go across it such as to enter, for example by force of gravity, the perforated tubular channels 504 internally of the containing bodies of the modules. The liquid can also be distributed directly to the single tubes 504 by means of small tubes which are not illustrated in the figures, which thus provides better distribution but with a greater complexity of the layout. The tubes might also run over a part or all of the length of the holes tubes 504 such as to convey the liquid to the most appropriate point of the tubes 504. This embodiment requires the installation of the modules at an angle of inclination of around 20°.

The liquid introduced in the tubes 504 evaporates by effect of the solar heat, the steam produced rising along the tubes and being recondensed in the condenser, then to be newly returned to circulation, as in the characteristic functioning of heat-pipe systems.

In this functioning mode the pressure of the steam in the modules is constant and there is neither absorption nor relinquishing of stem by the porous material which therefore does not participate in the function, while the liquid is evaporated directly by effect of the solar heat, without the liquid coming into contact with the porous material. Differently to functioning in the refrigerating cycle, the functioning in the heating cycle is continuous, with all modules operating contemporaneously and without therefore requiring an inversion of the cycle.

The solar heat absorbed by the modules is then transformed into latent evaporation heat which is subsequently returned to the condenser in the form of an equal quantity of latent condensation heat, and is then transferred to a secondary circuit such as to be re-utilised in the heating circuit.

In the heating mode the condensation unit 300 functions at a higher pressure and temperature with respect to the functioning in refrigerating mode, which enables fluid temperature in the secondary circuit to be advantageously higher.

The advantage of this solution with respect to traditional tube heating systems which function according to the heat-pipe principle consists in the fact that the liquid flow introduced into the modules is regulated by the by-pass valve managed by the control unit, by means of which it is possible to prevent flooding of the modules, which requires not-inconsiderable start-up times at the daily cycle start-up.

The design of the plant and the compressor device is modular and is therefore simply adaptable to different required refrigeration potential. The mass of the porous material is such as to guarantee 1-2 hours' autonomy in a case of temporary absence of the solar radiation.

In the most simplified form, the only regulation present relates to the frequency of rotation of the module/reflector, the control of the expansion valve located on the evaporator (which could also be constituted by a thermostat valve) and possible the opening of the by-pass valve used for switching over to the heating mode.

## Claims

1. A compressor device (200) for conditioning of an environment, comprising:
at least a heat exchange module (500) housing absorbent material;
selector means (600) for placing the heat exchange module in at least a first operating condition, in which the heat exchange module is at least partly exposed to solar radiation, and in at least a second operating condition, in which the heat exchange module is exposed to a cooling environment, the heat exchange module having at least an inlet port able to receive an operating fluid at a first pressure and at least an outlet port for discharging the operating fluid at a second pressure which second pressure is greater than the first pressure, the compressor device (200) **characterized in that** the heat exchange module (500) in the first operating condition receiving solar heat such that the absorbent material releases operating fluid, determining an increase in pressure of the operating fluid internally of the heat exchange module, the heat exchange module (500) in the second operating condition being predisposed to yield heat to the cooling environment such that the absorbent material absorbs operating fluid, causing a pressure drop internally of the heat exchange module.

2. The compressor device of the preceding claim, **characterised in that** the at least a heat exchange module comprises:
at least a containing body of the absorbent material having at least a wall which is at least partly transparent to solar radiation in order to enable a heating of the fluid and the absorbent material;
at least a reflector which is positionable in such a way in relation to the containing body as to substantially focus incident solar radiation on the reflector towards the transparent wall, the absorbent material preferably comprising porous material, preferably adsorbent porous material such as zeolite.

3. The compressor device of the preceding claim, **characterised in that** the containing body houses at least a tubular body which is predisposed to receive the operating fluid arriving in inlet to the heat exchange module and to send on the operating fluid downstream of the heat exchange module, the tubular body exhibiting, for example on a lateral wall thereof, a plurality of through-holes for enabling a passage of fluid between the internal cavity of the tubular body and a zone in which the absorbent material is housed,
the containing body in particular comprising at least a first longitudinal seating in which the tubular body and the absorbent material are housed, and a second longitudinal seating, adjacent and sealedly separate with respect to the first longitudinal seating, optionally further comprising a third longitudinal seating adjacent and sealedly separate with respect to the first longitudinal seating, the second and the third longitudinal seatings preferably being symmetrically opposite with respect to the first longitudinal seating.

4. The compressor device of claim 3, wherein the second and the third longitudinal seatings are connected to one another, defining a single fluid channel having an inlet opening at an end of the second seating and an outlet opening at an end of the third seating, the inlet opening and the outlet opening being at a same longitudinal end of the heat exchange module or alternatively each of the second and the third seatings exhibiting a respective inlet opening and a respective outlet opening.

5. The compressor device of any one of the preceding claims 2-4, wherein the containing body is housed internally of a glass tube having a single or double wall, in the latter case an insulating vacuum being preferably afforded between the walls of the glass tube, the compressor device comprising two or more heat exchange modules.

6. The compressor device of any one of the preceding claims, **characterised in that** the selector means comprise a movement system acting on the reflector and/or on the containing body of the heat exchange module or each of the heat exchange modules, the movement system in detail being active on the reflector and able to move the reflector between a position, corresponding to the first operating condition, in which the reflector focuses incident solar radiation thereon towards the transparent wall, and a position, corresponding to the second operating condition, in which the reflector substantially prevents solar radiation on the transparent wall, the containing body optionally being substantially positioned at a focal axis of the reflector and the movement system moving the reflector and/or the containing body by rotation, for example by about 180°, about the focal axis.

7. The compressor device of any one of the preceding claims 2-6, **characterised in that** at least two containing bodies are provided, symmetrically opposite to a rotation axis of the reflector axis.

8. The compressor device of any one of the preceding claims, **characterised in that** the selector means comprise at least a control unit operatively connected with the movement system and programmed to selectively command the positioning of the heat exchange module or modules in the first or the second operating condition, the control unit optionally being further programmed to command the movement system such as to orientate the reflector and/or the containing body according to the position of the sun.

9. The compressor device of any one of the preceding claims, **characterised in that** it comprises:
a first group comprising one or more heat-exchange modules, and
a second group comprising one or more heat-exchange modules, the control unit being programmed to periodically synchronise the displacement of the first group of heat exchange modules from the first to the second operating condition and the displacement of the second group of heat-exchange modules from the second to the first operating condition, the heat exchange modules of the first group being connected in parallel with respect to the heat exchange modules of the second group.

10. The device of any one of the preceding claims, **characterised in that** the first group comprises a single collecting manifold of the fluid in outlet from the plurality of modules of the first group; and/or **in that** the second group comprises a single collecting manifold of the fluid in outlet from the plurality of modules of the second group.

11. An environmental conditioning plant, comprising:
an expansion unit of an operating fluid;
a compressor device as in claim 1, set in fluid communication with the expansion unit and receiving in inlet the operating fluid coming from the expansion unit
at an inlet pressure and releasing, in outlet, the operating fluid at an outlet pressure which is greater than the inlet pressure, the compressor device comprising:
at least a heat exchange module receiving the operating fluid and housing absorbent material;
selector means for placing the heat exchange module in at least a first operating condition, in which the heat exchange module is at least partly exposed to solar radiation, and in at least a second operating condition, in which the heat exchange module is exposed to a cooling environment, the heat exchange module in the first operating condition receiving solar heat such that the absorbent material releases operating fluid and thus determines a pressure increase of the operating fluid internally of the heat exchange module, the heat exchange module in the second operating condition yielding heat to the cooling environment such that the absorbent material absorbs operating fluid, causing a pressure drop internally of the heat exchange module.

12. The plant of claim 11, comprising at least a condensation unit located downstream of the compressor device and upstream of the expansion unit, the condensation unit receiving the operating fluid in inlet and transforming a gaseous stage of the operating fluid into a liquid phase; the expansion unit receiving the operating fluid and operating an expansion of a liquid phase of the operating fluid into a gaseous phase, the expansion unit in particular comprising at least a laminating device of the operating fluid, at least an evaporator for expansion of the operating fluid operating downstream of the laminating device, and at least a heat exchange surface being predisposed to remove heat from an external environment to the expansion unit, transferring the heat to the operating fluid in expansion.

13. The plant of claim 11, **characterised in that** the at least a heat exchange module comprises:
at least a containing body of the absorbent material having at least a wall which is at least partially transparent to solar radiation in order to enable heating of the fluid and the absorbent material;
at least a reflector which is positionable in relation to the containing body such as to focus solar radiation substantially incident on the reflector towards the transparent wall, the absorbent material optionally comprising porous material, preferably adsorbent porous material such as zeolite.

14. The plant of any one of claims 12, 13, wherein the containing body houses at least a tubular body which is predisposed to receive the operating fluid coming directly or indirectly from the evaporating unit and to send the operating fluid downstream of the heat exchange module, the tubular body exhibiting, for example on a lateral wall thereof, a plurality of through-openings for enabling a fluid passage between the internal cavity of the tubular body and a zone in which the absorbent material is housed, the containing body in particular comprising at least a first longitudinal seating in which the tubular body and the absorbent material are housed, and a second longitudinal seating adjacent to and sealedly separated with respect to the first longitudinal seating.

15. The plant of claim 14, **characterised in that** it further comprises a third longitudinal seating adjacent to and sealedly separated with respect to the first longitudinal seating, wherein in a first variant the second and the third longitudinal seatings are connected to one another, defining a single fluid channel with an inlet opening present at an end of the second seating and an outlet opening at an end of the third seating and wherein in a second variant each of the second and third seatings exhibits a respective inlet opening and a respective outlet opening, the containing body preferably being housed internally of a glass tube having a single wall or a double wall, an insulating vacuum being comprised in the case of the double wall, between the walls of the glass tube.

## Patentansprüche

1. Verdichtervorrichtung (200) zur Klimatisierung eines Raumes, umfassend:
mindestens ein Wärmeaustauschmodul (500) enthaltend ein absorbierendes Material;
Auswahlmittel (600) zum Platzieren des Wärmeaustauschmoduls in mindestens einen ersten Betriebszustand, in dem das Wärmeaustauschmodul der Sonnenbestrahlung mindestens teilweise ausgesetzt ist, und in mindestens einen zweiten Betriebszustand, in dem das Wärmeaustauschmodul einer Kühlumgebung ausgesetzt ist, wobei das Wärmeaustauschmodul mindestens eine Einlassöffnung, die ein Betriebsfluid bei einem ersten Druck empfangen kann, und eine Auslassöffnung, die das Betriebsfluid bei einem zweiten Druck ablassen kann, aufweist, welcher zweite Druck höher ist als der erste Druck, wobei die Verdichtervorrichtung (200) **dadurch gekennzeichnet ist, dass** das Wärmeaustauschmodul (500) im ersten Betriebszustand die Sonnenwärme empfängt, so dass das absorbierende Material das Betriebsfluid ablässt, wodurch eine Druckzunahme des Betriebsfluids innerhalb des Wärmeaustauschmoduls bestimmt wird, wobei das Wärmeaustauschmodul (500) im zweiten Betriebszustand vorgesehen ist, die Wärme zur Kühlumgebung abzugeben, so dass das absorbierende Material das Betriebsfluid absorbiert, wodurch ein Druckabfall innerhalb des Wärmeaustauschmoduls verursacht wird.

2. Verdichtervorrichtung nach dem vorherigen Anspruch, **dadurch gekennzeichnet, dass** das mindestens eine Wärmeaustauschmodul umfasst:
mindestens einen Aufnahmekörper des absorbierenden Materials mit mindestens einer Wand, die der Sonnenbestrahlung mindestens teilweise durchsichtig ist, um das Fluid und das absorbierende Material beheizen zu können;
mindestens einen Reflektor, der bezüglich dem Aufnahmekörper so positionierbar ist, die Sonneneinstrahlung auf den Reflektor zur durchsichtigen Wand wesentlich zu fokussieren, wobei das absorbierende Material bevorzugt poröses Material umfasst, bevorzugt adsorbierendes poröses Material wie Zeolithe.

3. Verdichtervorrichtung nach dem vorherigen Anspruch, **dadurch gekennzeichnet, dass** der Aufnahmekörper mindestens einen Rohrkörper enthält, der vorgesehen ist, das ins Wärmeaustauschmodul ankommende Betriebsfluid zu empfangen und das Betriebsfluid abwärts vom Wärmeaustauschmodul weiter zu fördern, wobei der Rohrkörper z.B. an einer Seitenwand davon eine Vielzahl von Durchgangsbohrungen aufweist, um einen Fluiddurchgang zwischen dem Innenhohlraum des Rohrkörpers und einem Bereich, wo das absorbierende Material enthalten ist, zu ermöglichen,
wobei der Aufnahmekörper insbesondere einen ersten Längssitz, wo der Rohrkörper und das absorbierende Material enthalten sind, und einen zweiten Längssitz, der am ersten Längssitz anliegt und abgedichtet getrennt davon ist, umfasst, optional weiter umfassend einen dritten Längssitz, der am ersten Längssitz anliegt und abgedichtet getrennt davon ist, wobei der zweite und der dritte Längssitze bevorzugt dem ersten Längssitz symmetrisch entgegengesetzt sind.

4. Verdichtervorrichtung nach Anspruch 3, wobei die zweite und dritte Sitze miteinander verbunden sind und dadurch einen einzelnen Fluidkanal definieren, mit einer Einlassöffnung an einem Ende des zweiten Sitzes und einer Auslassöffnung an einem Ende des dritten Sitzes, wobei die Einlassöffnung und die Auslassöffnung an demselben Längsende des Wärmeaustauschmoduls liegen oder alternativ jeder der zweiten und dritten Sitze eine jeweilige Einlassöffnung und eine jeweilige Auslassöffnung aufweist.

5. Verdichtervorrichtung nach einem der vorherigen Ansprüche 2-4, wobei der Aufnahmekörper innerhalb eines Glasrohres mit einem Einzel- oder Doppelwand enthalten ist, wobei im letzteren Fall ein isolierendes Vakuum zwischen den Wänden des Glasrohres angelegt wird, wobei die Verdichtervorrichtung zwei oder mehrere Wärmeaustauschmodule aufweist.

6. Verdichtervorrichtung nach einem der vorherigen Ansprüche, **dadurch gekennzeichnet, dass** die Auswahlmittel ein Bewegungssystem umfassen, das auf den Reflektor und/oder den Aufnahmekörper des Wärmeaustauschmoduls oder jedes der Wärmeaustauschmodule wirkt, wobei das Bewegungssystem im Detail auf den Reflektor wirkend ist und den Reflektor zwischen einer Stellung, die dem ersten Betriebszustand entspricht und in dem der Reflektor die Sonneneinstrahlung darauf zur durchsichtigen Wand fokussiert, und einer Stellung, die dem zweiten Betriebszustand entspricht und in dem der Reflektor die Sonnenbestrahlung auf der durchsichtigen Wand wesentlich verhindert, bewegen kann, wobei optional der Aufnahmekörper an einer Brennachse des Reflektors wesentlich positioniert ist und das Bewegungssystem den Reflektor und/oder den Aufnahmekörper durch Drehung, z.B. um ca. 180°, um die Brennachse bewegt.

7. Verdichtervorrichtung nach einem der vorherigen Ansprüche 2-6, **dadurch gekennzeichnet, dass** mindestens zwei Aufnahmekörper vorgesehen sind, die einer Drehachse der Reflektorachse symmetrisch entgegengesetzt sind.

8. Verdichtervorrichtung nach einem der vorherigen Ansprüche, **dadurch gekennzeichnet, dass** die Auswahlmittel mindestens eine Steuereinheit umfassen, die mit dem Bewegungssystem operativ verbunden ist und programmiert ist zum selektiven Steuern der Positionierung des Wärmeaustauschmoduls oder der Wärmeaustauschmodule im ersten oder zweiten Betriebszustand, wobei die Steuereinheit optional weiter programmiert ist zum Steuern des Bewegungssystems, um den Reflektor und/oder den Aufnahmekörper nach der Sonnenstellung auszurichten.

9. Verdichtervorrichtung nach einem der vorherigen Ansprüche, **dadurch gekennzeichnet, dass** sie umfasst:
eine erste Gruppe umfassend eine oder mehrere Wärmeaustauschmodule, und
eine zweite Gruppe umfassend eine oder mehrere Wärmeaustauschmodule, wobei die Steuereinheit programmiert ist zum periodischen Synchronisieren der Verschiebung der ersten Gruppe von Wärmeaustauschmodulen vom ersten zum zweiten Betriebszustand und der Verschiebung der zweiten Gruppe von Wärmeaustauschmodulen vom zweiten zum ersten Betriebszustand, wobei die Wärmeaustauschmodule der ersten Gruppe parallel gegenüber den Wärmeaustauschmodulen der zweiten Gruppe verbunden sind.

10. Verdichtervorrichtung nach einem der vorherigen Ansprüche, **dadurch gekennzeichnet, dass** die erste Gruppe einen Einzelsammelverteiler des aus der Vielzahl von Modulen der ersten Gruppe ausfließenden Fluids umfasst; und/oder dass die zweite Gruppe einen Einzelsammelverteiler des aus der Vielzahl von Modulen der zweiten Gruppe ausfließenden Fluids umfasst.

11. Raumklimaanlage umfassend:
eine Ausdehnungseinheit für ein Betriebsfluid;
eine Verdichtervorrichtung nach Anspruch 1, die mit der Ausdehnungseinheit in Fluidkommunikation gesetzt wird sowie als Einlass das von der Ausdehnungseinheit ankommende Betriebsfluid bei einem Einlassdruck empfängt und als Auslass das Betriebsfluid bei einem Auslassdruck, der höher ist als der Einlassdruck, abgibt, wobei die Verdichtervorrichtung umfasst:
mindestens ein Wärmeaustauschmodul, das das Betriebsfluid empfängt und ein absorbierendes Material enthält;
Auswahlmittel zum Platzieren des Wärmeaustauschmoduls in mindestens einen ersten Betriebszustand, in dem das Wärmeaustauschmodul der Sonnenbestrahlung mindestens teilweise ausgesetzt ist, und in mindestens einen zweiten Betriebszustand, in dem das Wärmeaustauschmodul einer Kühlumgebung ausgesetzt ist, wobei das Wärmeaustauschmodul im ersten Betriebszustand die Sonnenwärme empfängt, so dass das absorbierende Material das Betriebsfluid ablässt, wodurch eine Druckzunahme des Betriebsfluids innerhalb des Wärmeaustauschmoduls bestimmt wird, wobei das Wärmeaustauschmodul im zweiten Betriebszustand die Wärme zur Kühlumgebung abgibt, so dass das absorbierende Material das Betriebsfluid absorbiert, wodurch ein Druckabfall innerhalb des Wärmeaustauschmoduls verursacht wird.

12. Anlage nach Anspruch 11, umfassend mindestens eine Kondensationseinheit abwärts von der Verdichtervorrichtung und aufwärts von der Ausdehnungseinheit, wobei die Kondensationseinheit das Betriebsfluid als Einlass empfängt und eine gasförmige Stufe des Betriebsfluids in eine flüssige Phase umwandelt; wobei die Ausdehnungseinheit das Betriebsfluid empfängt und eine Ausdehnung einer flüssigen Phase des Betriebsfluids in eine gasförmige Phase bewirkt, wobei die Ausdehnungseinheit insbesondere umfasst mindestens eine Laminiervorrichtung für das Betriebsfluid, mindestens einen Verdampfer zur Ausdehnung des Betriebsfluids, der abwärts von der Laminiervorrichtung arbeitet, und mindestens eine Wärmeaustauschfläche, die zur Entfernung von Wärme von einem Außenraum zur Ausdehnungseinheit vorgesehen ist, wodurch die Wärme zum sich ausdehnenden Betriebsfluid übertragen wird.

13. Anlage nach Anspruch 11, **dadurch gekennzeichnet, dass** das mindestens eine Wärmeaustauschmodul umfasst:
mindestens einen Aufnahmekörper des absorbierenden Materials mit mindestens einer Wand, die der Sonnenbestrahlung mindestens teilweise durchsichtig ist, um das Fluid und das absorbierende Material beheizen zu können;
mindestens einen Reflektor, der bezüglich dem Aufnahmekörper so positionierbar ist, die Sonneneinstrahlung auf den Reflektor zur durchsichtigen Wand wesentlich zu fokussieren, wobei das absorbierende Material optional poröses Material umfasst, bevorzugt adsorbierendes poröses Material wie Zeolithe.

14. Anlage nach einem der Ansprüche 12, 13, wobei der Aufnahmekörper mindestens einen Rohrkörper enthält, der vorgesehen ist, das unmittelbar oder mittelbar von der Verdampfeinheit ankommende Betriebsfluid zu empfangen und das Betriebsfluid abwärts vom Wärmeaustauschmodul zu fördern, wobei der Rohrkörper z.B. an einer Seitenwand davon eine Vielzahl von Durchgangsbohrungen aufweist, um einen Fluiddurchgang zwischen dem Innenhohlraum des Rohrkörpers und einem Bereich, wo das absorbierende Material enthalten ist, zu ermöglichen, wobei der Aufnahmekörper insbesondere einen ersten Längssitz, wo der Rohrkörper und das absorbierende Material enthalten sind, und einen zweiten Längssitz, der am ersten Längssitz anliegt und abgedichtet getrennt davon ist, umfasst.

15. Anlage nach Anspruch 14, **dadurch gekennzeichnet, dass** sie einen dritten Längssitz weiter umfasst, der am ersten Längssitz anliegt und abgedichtet getrennt davon ist, wobei in einer ersten Variante der zweite und der dritte Längssitze miteinander verbunden sind und dadurch einen einzelnen Fluidkanal definieren, mit einer Einlassöffnung an einem Ende des zweiten Sitzes und einem Auslassöffnung an einem Ende des dritten Sitzes, und wobei in einer zweiten Variante jeder der zweiten und dritten Sitze eine jeweilige Einlassöffnung und eine jeweilige Auslassöffnung aufweist, wobei der Aufnahmekörper bevorzugt innerhalb eines Glasrohres mit einem Einzel- oder Doppelwand enthalten ist, wobei im Fall der Doppelwand ein isolierendes Vakuum zwischen den Wänden des Glasrohres enthalten ist.

## Revendications

1. Dispositif compresseur (200) pour la climatisation d'une ambiance, comprenant:
au moins un module échangeur de chaleur (500) contenant du matériau absorbant;
des moyens sélecteurs (600) aptes à placer le module échangeur de chaleur dans au moins une première condition opérationnelle, dans laquelle le module échangeur de chaleur est au moins partiellement exposé au rayonnement solaire, et dans au moins une deuxième condition opérationnelle, dans laquelle le module échangeur de chaleur est exposé à une ambiance de refroidissement, le module échangeur de chaleur ayant au moins un orifice d'entrée apte à recevoir un fluide opérationnel à une première pression et au moins un orifice de sortie pour décharger le fluide opérationnel à une deuxième pression, laquelle deuxième pression est supérieure à la première pression, le dispositif compresseur (200) étant **caractérisé en ce que** le module échangeur de chaleur (500) dans la première condition opérationnelle reçoit la chaleur du soleil de sorte que le matériau absorbant relâche le fluide opérationnel, déterminant une augmentation de la pression du fluide opérationnel à l'intérieur du module échangeur de chaleur, le module échangeur de chaleur (500) dans la deuxième condition opérationnelle étant apte à céder du chaleur à l'ambiance de refroidissement de sorte que le matériau absorbant absorbe le fluide opérationnel, déterminant une chute de pression à l'intérieur du module échangeur de chaleur.

2. Dispositif compresseur selon la revendication précédente, **caractérisé en ce que** l'au moins un module échangeur de chaleur comprend
au moins un corps de confinement pour le matériau absorbant ayant au moins une paroi qui est au moins partiellement transparente au rayonnement solaire afin de permettre un réchauffement du fluide et du matériau absorbant;
au moins un réflecteur positionnable par rapport au corps de confinement de sorte à focaliser substantiellement le rayonnement solaire incident sur le réflecteur vers la paroi transparente, le matériau absorbant étant de préférence un matériau poreux, de préférence un matériau poreux adsorbant tel que la zéolithe.

3. Dispositif compresseur selon la revendication précédente, **caractérisé en ce que** le corps de confinement contient au moins un corps tubulaire apte à recevoir le fluide opérationnel arrivant en entrée dans le module échangeur de chaleur et à transporter le fluide opérationnel en aval du module échangeur de chaleur, le corps tubulaire présentant, par exemple sur une paroi latérale de celui-ci, une pluralité de trous passants pour permettre un passage du fluide entre la cavité intérieure du corps tubulaire et une zone dans laquelle se trouve le matériau absorbant,
le corps de confinement comprenant en particulier au moins un premier siège longitudinal dans lequel sont contenus le corps tubulaire et le matériau absorbant, et un deuxième siège longitudinal, adjacent et séparé de façon étanche par rapport au premier siège longitudinal, optionnellement comprenant en outre un troisième siège longitudinal adjacent et séparé de façon étanche par rapport au premier siège longitudinal, les deuxième et troisième sièges longitudinaux étant de préférence symétriquement opposés par rapport au premier siège longitudinal.

4. Dispositif compresseur selon la revendication 3, où les deuxième et troisième sièges longitudinaux sont reliés l'un à l'autre, définissant un canal de fluide singulier ayant une ouverture d'entrée à une extrémité du deuxième siège et une ouverture de sortie à une extrémité du troisième siège, l'ouverture d'entrée et l'ouverture de sortie étant sur une même extrémité longitudinale du module échangeur de chaleur ou en alternative chacun des deuxième et troisième sièges présentant une ouverture d'entrée respective et une ouverture de sortie respective.

5. Dispositif compresseur selon l'une quelconque des revendications précédentes 2-4, où le corps de confinement est contenu à l'intérieur d'un tube de verre ayant une paroi singulier ou double, dans le dernier cas un vide isolant étant prévu de préférence entre les parois du tube de verre, le dispositif compresseur comprenant deux ou plusieurs modules échangeurs de chaleur.

6. Dispositif compresseur selon l'une quelconque des revendications précédentes, **caractérisé en ce que** les moyens sélecteurs comprennent un système de mouvement agissant sur le réflecteur et/ou sur le corps de confinement du module échangeur de chaleur ou de chacun des modules échangeurs de chaleur, le système de mouvement en détail agissant sur le réflecteur et étant à même de déplacer le réflecteur entre une position, correspondant à la première condition opérationnelle, dans laquelle le réflecteur focalise le rayonnement solaire incident sur lui vers la paroi transparente, et une position, correspondant à la deuxième condition opérationnelle, dans laquelle le réflecteur empêche substantiellement le rayonnement solaire sur la paroi transparente, le corps de confinement optionnellement étant substantiellement positionné sur un axe focal du réflecteur et le système de mouvement déplaçant le réflecteur et/ou le corps de confinement par rotation, par exemple d'environ 180°, autour de l'axe focal.

7. Dispositif compresseur selon l'une quelconque des revendications 2-6, **caractérisé en ce que** au moins deux corps de confinement sont prévus, symétriquement opposés à un axe de rotation de l'axe du réflecteur.

8. Dispositif compresseur selon l'une quelconque des revendications précédentes, **caractérisé en ce que** les moyens sélecteurs comprennent au moins une unité de commande reliée de façon opérationnelle au système de mouvement et programmée pour commander de façon sélective le positionnement du module échangeur de chaleur ou des modules échangeurs de chaleur dans la première ou deuxième condition opérationnelle, l'unité de commande optionnellement étant programmée en outre pour commander le système de mouvement de sorte à orienter le réflecteur et/ou le corps de confinement selon la position du soleil.

9. Dispositif compresseur selon l'une quelconque des revendications précédentes, **caractérisé en ce qu'**il comprend:
un premier groupe comprenant un ou plusieurs modules échangeurs de chaleur, et
un deuxième groupe comprenant un ou plusieurs modules échangeurs de chaleur, l'unité de commande étant programmée pour synchroniser périodiquement le déplacement du premier groupe de modules échangeurs de chaleur de la première à la deuxième condition opérationnelle et le déplacement du deuxième groupe de modules échangeurs de chaleur de la deuxième à la première condition opérationnelle, les modules échangeurs de chaleur du premier groupe étant reliés en parallèle par rapport aux modules échangeurs de chaleur du deuxième groupe.

10. Dispositif compresseur selon l'une quelconque des revendications précédentes, **caractérisé en ce que** le premier groupe comprend un collecteur singulier du fluide sortant de la pluralité de modules du premier groupe; et/ou **en ce que** le deuxième groupe comprend un collecteur singulier du fluide sortant de la pluralité de modules du deuxième groupe.

11. Système de climatisation d'ambiance, comprenant:
une unité d'expansion d'un fluide opérationnel;
un dispositif compresseur selon la revendication 1, en communication de fluide avec l'unité d'expansion et recevant en entrée le fluide opérationnel provenant de l'unité d'expansion à une pression d'entrée et relaxant en sortie le fluide opérationnel à une pression de sortie supérieure de la pression d'entrée, le dispositif compresseur comprenant:
au moins un module échangeur de chaleur recevant le fluide opérationnel et contenant du matériau absorbant; des moyens sélecteurs aptes à placer le module échangeur de chaleur dans au moins une première condition opérationnelle, dans laquelle le module échangeur de chaleur est au moins partiellement exposé au rayonnement solaire, et dans au moins une deuxième condition opérationnelle, dans laquelle le module échangeur de chaleur est exposé à une ambiance de refroidissement, le module échangeur de chaleur dans la première condition opérationnelle recevant la chaleur du soleil de sorte que le matériau absorbant relâche le fluide opérationnel, déterminant une augmentation de la pression du fluide opérationnel à l'intérieur du module échangeur de chaleur, le module échangeur de chaleur dans la deuxième condition opérationnelle cédant la chaleur à l'ambiance de refroidissement de sorte que le matériau absorbant absorbe le fluide opérationnel, déterminant une chute de pression à l'intérieur du module échangeur de chaleur.

12. Système selon la revendication 11, comprenant au moins une unité de condensation placé en aval du dispositif compresseur et en amont de l'unité d'expansion, l'unité de condensation recevant le fluide opérationnel en entrée et transformant un phase gazeuse du fluide opérationnelle dans une phase liquide; l'unité d'expansion recevant le fluide opérationnel et réalisant une expansion d'une phase liquide du fluide opérationnel dans une phase gazeuse, l'unité d'expansion comprenant en particulier au moins une dispositif de laminage du fluide opérationnel, au moins un évaporateur pour l'expansion du fluide opérationnel opérant en aval du dispositif de laminage, et au moins une surface d'échange de chaleur étant apte à déplacer la chaleur d'une ambiance extérieure à l'unité d'expansion, transmettant la chaleur au fluide opérationnel en expansion.

13. Système selon la revendication 11, **caractérisé en ce que** l'au moins un module échangeur de chaleur comprend:
au moins un corps de confinement pour le matériau absorbant ayant au moins une paroi qui est au moins partiellement transparente au rayonnement solaire afin de permettre un réchauffement du fluide et du matériau absorbant;
au moins un réflecteur positionnable par rapport au corps de confinement de sorte à focaliser substantiellement le rayonnement solaire incident sur le réflecteur vers la paroi transparente, le matériau absorbant étant optionnellement un matériau poreux, de préférence un matériau poreux adsorbant tel que la zéolithe.

14. Système selon l'une quelconque des revendications 12, 13, où le corps de confinement contient au moins un corps tubulaire apte à recevoir le fluide opérationnel provenant directement ou indirectement de l'unité d'évaporation et à envoyer le fluide opérationnelle en aval du module échangeur de chaleur, le corps tubulaire présentant, par exemple sur une paroi latérale de celui-ci, une pluralité de trous passants pour permettre un passage du fluide entre la cavité intérieure du corps tubulaire et une zone dans laquelle est contenu le matériau absorbant, le corps de confinement comprenant en particulier au moins un premier siège longitudinal dans lequel sont contenus le corps tubulaire et le matériau absorbant, et un deuxième siège longitudinal, adjacent et séparé de façon étanche par rapport au premier siège longitudinal.

15. Système selon la revendication 14, **caractérisé en ce qu'**il comprend en outre un troisième siège longitudinal adjacent et séparé de façon étanche par rapport au premier siège longitudinal, où dans une première variante les deuxième et troisième sièges longitudinaux sont reliés l'un à l'autre, définissant un canal de fluide singulier avec une ouverture d'entrée présente à une extrémité du deuxième siège et une ouverture de sortie à une extrémité du troisième siège, et dans une deuxième variante chacun des deuxième et troisième sièges présente une ouverture d'entrée respective et une ouverture de sortie respective, le corps de confinement étant de préférence contenu à l'intérieur d'un tube de verre ayant une paroi singulier ou double, dans le cas de la paroi double un vide isolant étant compris de préférence entre les parois du tube de verre.
